# EUROPEAN PATENT APPLICATION

(11) **EP 1 803 989 A1**
(43) Date of publication of application: **04.07.2007**
(21) Application number: 05113001.1
(22) Date of filing: 27.12.2005
(51) Int. Cl.: F16P 3/14, G01V 8/14

(54) **Safety light barrier**

(71) Applicant: Datasensor S.p.A., 40050 Monte San Pietro (BO) (IT)
(72) Inventor: Lorenzoni, Enrico, 40069 Riale (BO) (IT)
(74) Representative: Luppi, Luigi

(57) **Abstract**

A safety barrier comprises a supporting arrangement (4, 5, 13, 14, 15, 16; 113, 115) which supports sensor means (7, 17, 18), said sensor means (7, 17, 18) comprising first sensor means (7) for detecting the passage of a body through said barrier (1; 101) and second sensor means (17, 18) for temporarily disabling said first sensor means (7), said sensor means including reflective sensor means (7, 17, 18).

## Description

The invention relates to a safety barrier, in particular to be used in industrial environments for preventing undesired access to a dangerous zone.

In order to prevent operators from accidentally entering dangerous zones, e.g. zones in which machine tools are working, it is known to use safety barriers positioned near the entrance to the dangerous zone. An example of a safety barrier is disclosed in EP 1329662, which relates to a photoelectric safety barrier comprising a plurality of light emitting diodes mounted on a first column located at one side of the entrance to the dangerous zone. The light emitting diodes generate respective beams which are detected by corresponding photodiodes mounted on a second column located at the other side of the entrance to the dangerous zone. A processing unit is connected to the photodiodes and receives signals therefrom. If an operator tries to pass between the first column and the second column, he intercepts the beams emitted by the light emitting diodes. The signals generated by the photodiodes and received by the processing unit are thereby modified. This is detected by the processing unit, which generates an alarm signal.

The safety barrier disclosed in EP 1329662 further comprises a plurality of muting sensors for temporarily disabling the barrier when objects allowed to enter the dangerous zone, e.g. pallets, pass through the barrier. The muting sensors comprise a pair of light emitters mounted on a first bracket which is connected to the first column. A pair of light receivers, which are mounted on a second bracket connected to the second column, receive respective light beams emitted by the light emitters and generate output signals which are then sent to the processing unit. If a pallet enters the dangerous zone, the light beams emitted by the light emitters are interrupted according to a preset sequence. The processing unit recognizes that an allowed object is advancing and temporarily disables the barrier, so that no alarm signal is generated.

A defect of the safety barrier disclosed in EP 1329662 is that it has a quite complicated structure. On the one side, the light emitting diodes supported by the first column and the light emitters mounted on the first bracket must be provided with suitable cables which connect them to a power source. On the other side, the photodiodes supported by the second column and the light receivers mounted on the second bracket must be connected, by means of further cables, to the power source and to the processing unit. Due to the cables and the further cables, the safety barrier is quite expensive and has relatively large dimensions. Furthermore, the cables and the further cables produce a significant electric noise.

An object of the invention is to improve safety barriers, in particular for use in industrial environments.

A further object is to provide safety barriers which are more simple and cheaper than the known ones.

A still further object is to reduce the overall dimensions of existing safety barriers.

Another object is to decrease electric noise produced by electric devices included in safety barriers.

According to the invention, there is provided a safety barrier comprising a supporting arrangement which supports sensor means, said sensor means comprising first sensor means for detecting the passage of a body through said barrier and second sensor means for temporarily disabling said first sensor means, characterized in that said sensor means includes reflective sensor means.

The reflective sensor means comprises an active part which is connected to a power source and to a processing unit and a passive part which merely reflects beams generated by the active part. Since the passive part does not need any electric connection or cable, the barrier according to the invention is more simple and cheaper than known barriers. Furthermore, by eliminating a part of electric cables, electric noise is significantly reduced. Finally, the overall dimensions of the barrier can be decreased.

The invention will be better understood and carried out with reference to the attached drawings, which show some exemplifying and non-limitative embodiments thereof, in which:
Figure 1 is a schematic view of a safety barrier comprising reflective sensor means;
Figure 2 is a view like Figure 1, showing an alternative embodiment of the safety barrier.

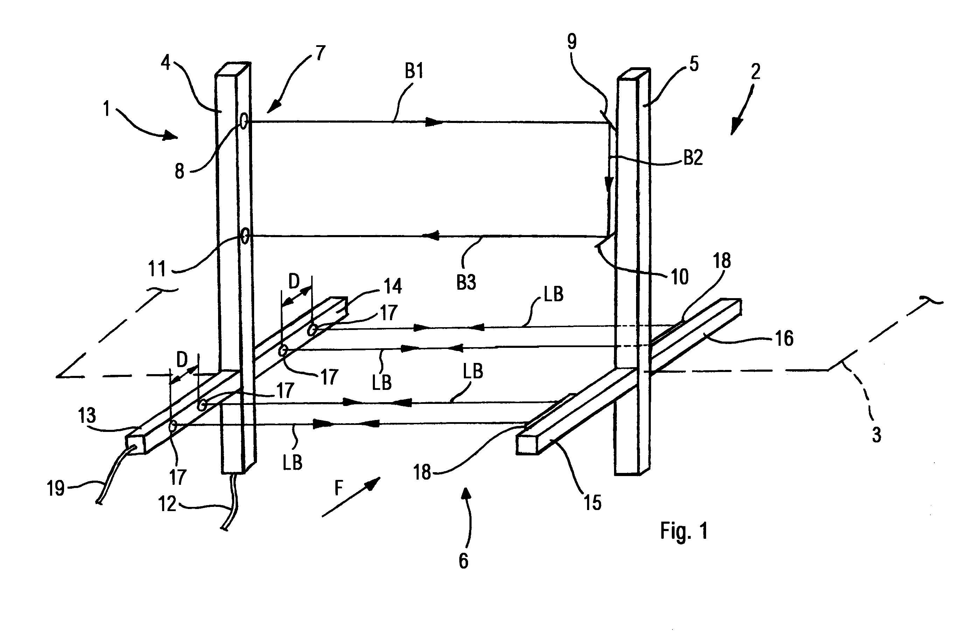

Figure 1 shows a safety barrier 1, in particular a safety barrier of the photoelectric type, which can also be called light curtain. The safety barrier 1 may be used to prevent undesired access to a dangerous zone 2 bound by a border 3 along which protecting mechanical means, e.g. a fence, are arranged. The dangerous zone 2 can be an area in which one or more automatic devices, such as machine tools or robots, are working. These automatic devices might hurt an operator who enters the dangerous zone 2 without proper precautions.

The safety barrier 1 comprises a first supporting arrangement and a second supporting arrangement having respectively a first column 4 and a second column 5 which extend vertically. The first column 4 and the second column 5 may comprise respective section bars, for example made of aluminium. The first column 4 and the second column 5 are placed at opposite sides of an opening 6 of the border 3. By passing through the opening 6 in an advance direction F it is possible to enter the dangerous zone 2.

The first column 4 and the second column 5 support first sensor means comprising first reflective sensor means for detecting the passage of a body through the barrier 1. In the example of Figure 1, only one reflective sensor 7, which can be a photoelectric reflective sensor, is shown. However, the first column 4 and the second column 5 can also support a plurality of reflective sensors similar to the reflective sensor 7 shown in Figure 1.

The reflective sensor 7 comprises an emitter 8, e.g. a light emitting diode (LED), fixed to the first column 4 and operable to emit a beam B1 directed from the first column 4 to the second column 5, i.e. transversely to the advance direction F. In the case shown in Figure 1, the beam B1 is horizontal. A mirror 9 fixed to the second column 5 intercepts the beam B1 and deviates it of about 90°, so that a reflected beam B2, which is substantially vertical, is obtained. The reflected beam B2 is further reflected by a further mirror 10 supported by the second column 5. The further mirror 10 deviates the reflected beam B2 of about 90°, so that a backward beam B3 is obtained. The backward beam B3 is directed towards the first column 4 and, in the example shown in Figure 1, is horizontal. The backward beam B3 is detected by a receiver 11, which is included in the first reflective sensor 7 and is mounted on the first column 4.

The emitter 8 and the receiver 11 are connected to a processing unit which is not shown by means of respective connectors included in an electric cable 12 associated to the first column 4. If a body passes between the first column 4 and the second column 5, the beam B1 and the backward beam B3 are interrupted. This is detected by the processing unit which then generates an alarm signal and possibly stops the machines in the dangerous zone 2.

The second column 5 is not provided with electric cables since the mirror 9 and the further mirror 10 do not require any electric connection.

The first supporting arrangement further comprises a first bar 13 and a second bar 14 mounted on the first column 4 and extending transversely to the latter. Similarly, the second supporting arrangement comprises a further first bar 15 and a further second bar 16 fixed to the second column 5 and extending transversely to the latter. In the example shown in Figure 1, the first bar 13, the second bar 14, the further first bar 15 and the further second bar 16 are substantially parallel to the advance direction F and perpendicular to the first column 4 and to the second column 5, i.e. horizontal. However, it is possible to adjust the position of the first bar 13 and of the second bar 14, in particular the height and the inclination thereof. Similarly, the height and the inclination of the further first bar 15 and of the further second bar 16 in relation to the second column 5 can be adjusted.

The first bar 13 and the further first bar 15 project from respective surfaces of the first column 4 and of the second column 5 opposite to further surfaces of the first column 4 and of the second column 5 from which the second bar 14 and the further second bar 16 project. Thus, the first bar 13 and the further first bar 15 are positioned outside the dangerous zone 2, whereas the second bar 14 and the further second bar 16 are positioned inside the dangerous zone 2.

The first bar 13 and the second bar 14 are provided with second sensor means comprising a plurality of detectors 17 of the reflective type. In the example shown in Figure 1, four detectors 17 are provided, two of which are mounted on the first bar 13 at a distance D from one another and the other two are mounted on the second bar 14 at a distance D from one another. In an embodiment which is not shown, the second sensor means can comprise a higher number of detectors 17. For example, four detectors 17 could be mounted on the first bar 13 and/or four detectors 17 could be mounted on the second bar 14.

The detectors 17 cooperate with corresponding prismatic reflectors 18 fixed to the further first bar 15 and to the further second bar 16. In particular, the detectors 17 emit respective light beams LB which are intercepted by the prismatic reflectors 18 and reflected back to the corresponding detector 17. The detectors 17 are connected to the processing unit by means of a further electric cable 19 associated to the first bar 13.

The detectors 17 act as muting sensors which temporarily disable the reflective sensor 7 when a body allowed to enter the dangerous zone 2, or to exit therefrom, passes through the barrier 1. For example, a pallet carrying components to be worked into the dangerous zone 2 or removing finished components from the dangerous zone 2 is allowed to pass through the barrier 1 without generating the alarm signal. If the pallet, moved by a conveyor which is not shown, advances in the advance direction F and passes through the barrier 1, the light beams LB generated by the detectors 17 mounted on the first bar 13 are interrupted according to a preset sequence. The processing unit recognizes that the barrier 1 is being crossed by an allowed body and temporarily disables the reflective sensor 7. The pallet can therefore enter the dangerous zone.

Similarly, if the pallet is leaving the dangerous zone 2 by moving in a direction opposite to the advance direction F, the light beams LB generated by the detectors 17 mounted on the second bar 14 are interrupted according to a preset sequence. The processing unit recognizes that an allowed body is crossing the barrier 1 and temporarily disables the reflective sensor 7, so that no alarm signal is generated.

On the other hand, if a non-allowed body, e.g. an operator, tries to pass through the barrier 1, the light beams LB are interrupted according to a sequence which is different from the preset one. The processing unit recognizes that a non-allowed body is passing through the barrier 1 and does not disable the reflective sensor 7. An alarm signal is therefore generated when the non-allowed body interrupts the beam B1 and the backward beam B3.

From the above description, it is clear that the barrier 1 comprises an active part, which includes the first column 4 to which the emitter 8 and the receiver 11 are fixed, the first bar 13 and the second bar 14 bearing the detectors 17. The active part is connected to the processing unit by means of the electric cable 12 and the further electric cable 19.

The barrier 1 further comprises a passive part, which includes the second column 5 on which the mirror 9 and the further mirror 10 are mounted, the further first bar 15 and the further second bar 16 supporting the prismatic reflectors 18. The passive part does not require any electric connection because the mirror 9, the further mirror 10 and the prismatic reflectors 18 do not need to be powered, nor do they generate a signal which must be elaborated in a processing unit.

The structure of the barrier 1 is therefore very simple. Since no electric connection must be provided on the passive part, the barrier 1 can be easily designed, manufactured and assembled and is thus cheaper than the existing ones. Furthermore, no electric noise is generated by the passive part of the barrier 1. Finally, the passive part is relatively small, which significantly decreases the overall dimensions of the barrier 1.

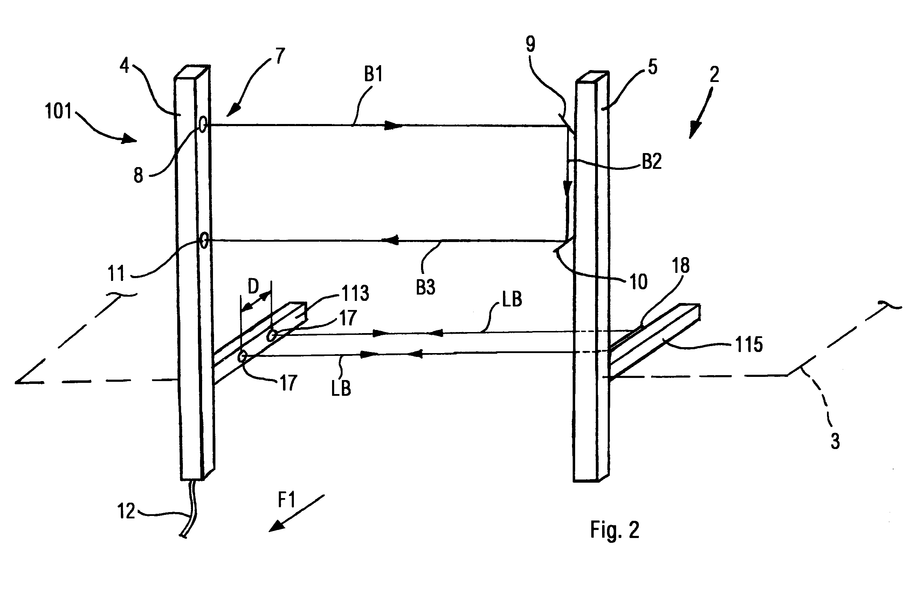

Figure 2 shows a barrier 101 according to an alternative embodiment. The parts of the barrier 101 which are similar to those of the barrier 1 shown in Figure 1 are indicated by the same reference numerals used in Figure 1 and will not be described in detail hereinafter. The barrier 101 differs from the barrier 1 in that only one bar 113 is connected to the first column 4 and only one further bar 115 is connected to the second column 5. The bar 113 supports two detectors 17 whereas the further bar 115 supports a prismatic reflector 18 which can reflect the light beams LB emitted by the detectors 17 backwards to the respective detector 17. The bar 113 and the further bar 115 are positioned inside the dangerous zone 2. Hence, the detectors 17 act as muting sensors only for a body passing through the barrier 101 while leaving the dangerous zone 2, i.e. only for a body moving in the exit direction F1.

In a further embodiment, which is not shown, the detectors acting as muting sensors and the prismatic reflectors, instead of being supported by bars fixed to the first column and to the second column, can be separated from the first column and from the second column. In this case, the detectors and the prismatic reflectors can be mounted along the advance direction and/or the exit direction in any desired position. For example, the detectors and the prismatic reflectors can be placed at the two sides of the conveyor carrying the pallets to, and away from, the dangerous zone 2.

## Claims

1. Safety barrier comprising a supporting arrangement (4, 5, 13, 14, 15, 16; 113, 115) which supports sensor means (7, 17, 18), said sensor means (7, 17, 18) comprising first sensor means (7) for detecting the passage of a body through said barrier (1; 101) and second sensor means (17, 18) for temporarily disabling said first sensor means (7), **characterized in that** said sensor means includes reflective sensor means (7, 17, 18).

2. Safety barrier according to claim 1, wherein said supporting arrangement (4, 5, 13, 14, 15, 16; 113, 115) comprises a first supporting arrangement (4, 13, 14; 113) and a second supporting arrangement (5, 15, 16; 115) which can be positioned at opposite sides of an entrance to a dangerous zone (2).

3. Safety barrier according to claim 2, wherein said first sensor means comprises first reflective sensor means (7) having an active arrangement (8, 11) mounted on said first supporting arrangement (4, 13, 14; 113) and a passive arrangement (9, 10) mounted on said second supporting arrangement (5, 15, 16; 115).

4. Safety barrier according to claim 3, wherein said active arrangement (8, 11) comprises an emitter (8) for emitting a beam (B1) and a receiver (11) for receiving the beam (B3) after it has been deviated by a reflecting device (9, 10) of said passive arrangement.

5. Safety barrier according to claim 4, wherein said reflecting device (9, 10) comprises a reflector (9) which deviates the beam (B1) generated by said emitter (8) of about 90° and a further reflector (10) which deviates the beam (B2) reflected by said reflector (9) of about 90° so as to direct it to said receiver (11).

6. Safety barrier according to any one of claims 3 to 5, wherein said active arrangement (8, 11) is connected to a processing unit by an electric connection (12), said passive arrangement (9, 10) being free of electric connections.

7. Safety barrier according to any one of claims 3 to 6, wherein said active arrangement (8, 11) is mounted on a first column (4) of said first supporting arrangement (4, 13, 14; 113) and said passive arrangement (9, 10) is mounted on a second column (5) of said second supporting arrangement (5, 15, 16; 115).

8. Safety barrier according to any one of claims 2 to 7, wherein said second sensor means comprises muting reflective sensor means (17, 18) having an active assembly (17) mounted on said first supporting arrangement (4, 13, 14; 113) and a passive assembly (18) mounted on said second supporting arrangement (5, 15, 16; 115) .

9. Safety barrier according to claim 8, wherein said passive assembly comprises a reflective element (18) for reflecting a light beam (LB) emitted by an emitter/receiver (17) included in said active assembly back to said emitter/receiver (17).

10. Safety barrier according to claim 8 or 9, as claim 8 is appended to claim 6, wherein said active assembly (17) is connected to said processing unit by a further electric connection (13), said passive assembly (18) being free of electric connections.

11. Safety barrier according to any one of claims 8 to 10, as claim 8 is appended to claim 7, wherein said active assembly (17) is mounted on bar means (13, 14; 113) of said first supporting arrangement (4, 13, 14; 113), said bar means (13, 14; 113) extending transversely to said first column (4), and said passive assembly (18) is mounted on further bar means (15, 16; 115) of said second supporting arrangement (5, 15, 16; 115), said further bar means (15, 16; 115) extending transversely to said second column (5).

12. Safety barrier according to claim 11, wherein said bar means (13, 14; 113) comprises a first bar (13; 113) and said further bar means (15, 16; 115) comprises a further first bar (15; 115).

13. Safety barrier according to claim 12, wherein said bar means (13, 14; 113) comprises a second bar (14) and said further bar means (15, 16; 115) comprises a further second bar (16), said second bar (14) and said further second bar (16) projecting from respective surfaces of said first column (4) and of said second column (5) opposite to further surfaces of said first column (4) and of said second column (5) from which said first bar (13) and said further first bar (15) project.
